**Europäisches Patentamt**

**European Patent Office**

**Office européen des brevets**

(19)

(11) Veröffentlichungsnummer : **0 072 572**
**B1**

(12)

# EUROPÄISCHE PATENTSCHRIFT

(45) Veröffentlichungstag der Patentschrift :
**12.02.86**

(21) Anmeldenummer : **82107537.1**

(22) Anmeldetag : **18.08.82**

(51) Int. Cl.⁴ : **A 01 D 34/70**

(54) Sammeleinrichtung an Rasenmähern.

(30) Priorität : **19.08.81 US 294261**

(43) Veröffentlichungstag der Anmeldung :
**23.02.83 Patentblatt 83/08**

(45) Bekanntmachung des Hinweises auf die Patenterteilung : **12.02.86 Patentblatt 86/07**

(84) Benannte Vertragsstaaten :
**DE FR GB SE**

(56) Entgegenhaltungen :
**DE-A- 2 002 584**
**DE-A- 2 537 120**
**US-A- 3 934 392**
**US-A- 3 974 631**
**US-A- 4 047 368**
**US-A- 4 095 398**
**US-A- 4 156 337**
**US-A- 4 259 832**

(73) Patentinhaber : **DEERE & COMPANY**
**1 John Deere Road**
**Moline Illinois 61265 (US)**

(72) Erfinder : **Moore, James Walter**
**701 Lake Shore Drive**
**Beaver Dam Wisconsin 53916 (US)**

(74) Vertreter : **Fricke, Joachim, Dr. et al**
**Dr. R. Döring, Dr. J. Fricke, Patentanwälte Josephspi-**
**talstrasse 7**
**D-8000 München 2 (DE)**

EP 0 072 572 B1

## Beschreibung

Die Erfindung betrifft eine Sammeleinrichtung an Rasenmähern mit einem Kraftstofftank-Füllstutzen, der nur von hinten zugänglich ist, wobei die Sammeleinrichtung hängend an einem Fahrzeug angeordnet ist, deren Hinterräder den Fahrzeugrahmen abstützen, und bei der ein seitlicher Sammelkanal des Rasenmähers nach rückwärts und nach oben ansteigend bis zu einem hinter dem Fahrzeug liegenden Auslaßabschnitt führt, der die abgemähten Rasenteilchen in Richtung quer zur Fahrtrichtung des Fahrzeuges in die Sammeleinrichtung leitet, welche zwei voneinander unabhängige, jeweils rechteckförmige randartige Halterahmen für Grassammelsäcke mit nebeneinanderliegenden Seitenabschnitten aufweist, die sich — in Fahrtrichtung gesehen — von einer innenliegenden vorderen Ecke aus parallel zur Fahrtrichtung nach hinten erstrecken, wobei die Halterahmen durch einen oberen Deckel abdeckbar und mittels eines aufrechten Tragteils an den Fahrzeugrahmen etwas tiefer als der Auslaßabschnitt des Sammelkanals befestigbar sind.

Eine Sammeleinrichtung dieser Art ist aus der US-PS 39 74 631 bekannt. Bei dieser Sammeleinrichtung ist für jeden Grassammelsack ein Aufnahmekorb vorgesehen, der an seiner Vorderseite Stege aufweist, mittels der der Korb an einer etwa senkrecht verlaufenden Strebe nach rückwärts schwenkbar befestigt ist, welche Strebe ihrerseits Verbindungsteile aufweist, die nach vorne vorspringen und an entsprechenden Halterungen an der Rückseite des Fahrzeuges befestigt werden können. Den beiden Körben ist ein gemeinsamer Deckel zugeordnet, der die oberen Enden der Körbe übergreift und der an den oberen Enden der aufrechten Streben der beiden Körbe angelenkt ist. Der Deckel ist zweigeteilt, wobei die in Fahrtrichtung weisende Deckelwand an den beiden aufrechten Streben starr befestigt ist und einen nach vorne vorspringenden Stutzen aufweist, in der der seitliche Sammelkanal eingreift.

Bei derartigen Rasenmähern erfolgt der Antrieb häufig mit Verbrennungsmotoren, so daß das Fahrzeug einen Kraftstofftank aufweist, der zumeist im hinteren Bereich unter dem Fahrzeugsitz angeordnet ist. Der dem Kraftstofftank zugeordnete Füllstutzen ist dabei in der Regel nur von der Rückseite des Fahrzeuges her zugänglich. Durch die etwa symmetrisch zur Längsmittellinie des Fahrzeuges angeordnete Sammeleinrichtung einschließlich ihres Deckels ist die Zugänghlichkeit zu dem Kraftstofftank-Füllstutzen erschwert. Hinzu kommt, daß man bestrebt ist, die Länge des Fahrzeuges klein zu halten und so die Sammeleinrichtung so dicht wie möglich an der Rückseite des Fahrzeuges anzubringen, wodurch der nahe an die Rückseite des Fahrzeuges angrenzende Fahrzeugsitz zusätzlich die Schwenkbarkeit des Deckels der Sammeleinrichtung behindert.

Es ist Aufgabe der Erfindung eine Sammeleinrichtung mit den Merkmalen des Oberbegriffs des Anspruchs 1 so weiterzubilden, daß bei einfacher Ausbildung der Sammeleinrichtung die Zugänglichkeit des Kraftstofftank-Füllstutzens wesentlich verbessert wird, ohne die Länge der aus Fahrzeug und Sammeleinrichtung bestehenden Einheit zu vergrößern.

Diese Aufgabe wird dadurch gelöst, daß die beiden Halterahmen jeweils an den innenliegenden, vorderen Ecken der nebeneinanderliegenden Seitenabschnitte starre Eckenteile und daran starr angebrachte, in Fahrtrichtung vorspringende Verbindungsteile aufweisen, und daß jeder Verbindungsteil von oben her auf das obere Ende des aufrechten Tragteils aufschiebbar und in die Betriebsstellung des Halterahmens absenkbar ist, derart, daß durch Abziehen des Verbindungsteils eines der Halterahmen mit den zugehörigen Grassammelsack aus einer Betriebsstellung nach oben der Zugang zu dem Kraftstofftank-Füllstutzen freigebbar ist. Die Anordnung läßt sich leicht und einfach handhaben. Die beiden Halterahmen brauchen dabei lediglich aus leichten, randartigen Abschnitten zu bestehen, in die jeweils ein Grassammelsack eingehängt ist. Die beiden Halterahmen sind voneinander unabhängig und jeder Halterahmen ist lediglich über seine innenliegende vordere Ecke an dem Tragteil unterstützt. Dabei sind die Halterahmen bzw. die an den Halterahmen angeordneten starren Eckenteile so ausgebildet, daß wenigstens einer der Halterahmen mit dem zugehörigen Grassammelsack mit einem Griff nach oben gezogen werden kann, wobei der zugehörige Eckenteil leicht nach oben von dem aufrechten Tragteil abgleitet, so daß nunmehr der Zugang zu dem Kraftstofftank-Füllstutzen völlig frei und ungehindert ist. Nach Füllen des Kraftstofftankes läßt sich der betreffende Halterahmen zusammen mit dem Grassammelsack in ebenso einfacher und bequemer Weise von oben her mit dem zugehörigen Eckenteil auf den Tragteil aufschieben und in die Betriebsstellung absenken. Die Handhabung ist bequem und einfach und erleichtert den Zugang zu dem Kraftstofftank ganz wesentlich.

Eine weitere Vereinfachung der Handhabung der Sammeleinrichtung erhält man, wenn die Anordnung so getroffen ist, daß der aufrechte Tragteil und die Gelenkverbindung für den Deckel gegenüber der Mitte eines Fahrzeugsitzes oder gegenüber dem rückwärtigen und nach oben ragenden Füllstutzen zu der Fahrzeugseite hin versetzt angeordnet sind, auf der der seitliche Sammelkanal zugeordnet ist. Hierbei ist die gesamte Sammeleinrichtung gegenüber der senkrechten Längsmittelebene des Fahrzeuges zu einer Fahrzeugseite hin versetzt, also asymmetrisch angeordnet, und zwar zu der Fahrzeugseite hin, auf der seitliche Sammelkanal angeordnet ist. Hierdurch wird weiterhin die Zugänglichkeit zu dem Kraftstofftank-Füllstutzen erleichtert, da nach Abnahme des einen Halterahmens die Zugänglichkeit zu dem Füllstutzen auch durch den verbleibenden Halterahmen und den zughörigen Grassammelsack nicht mehr beeinträchtigt wird.

Weiterhin wird dadurch aber auch die Schwenkbarkeit des Deckels wesentlich erleichtert, da durch die versetzte Anordnung der weit hinten liegende Fahrzeugsitz die Schwenkbarkeit des Deckels nicht mehr beeinträchtigt. Dadurch kann die Sammeleinrichtung besonders dicht an die Rückseite des Fahrzeuges herangerückt werden. Durch die versetzte Anordnung ergibt sich aber auch die Möglichkeit einer günstigeren Einbringung des Erntegutes in die Sammeleinrichtung, da nunmehr der seitliche Sammelkanal in das Innere des Deckels hineingeführt und in Richtung zur senkrechten Längsmittelebene des Fahrzeuges gekrümmt enden kann. Dies wird dadurch möglich, daß der domförmig ausgebildete Deckel eine nach vorne weisende Öffnung zur frei verschieblichen Aufnahme des Auslaßabschnittes des seitlichen Sammelkanals aufweist, wobei seine zum Aufklappen dienende Querachse rechtwinkelig zu dem Auslaßabschnitt so orientiert ist, daß der Deckel unter relativer Gleitbewegung des Auslaßabschnittes in der Öffnung um die Querachse aufklappbar ist.

Der aufrechte Tragteil kann an seinem oberen Ende einen Schlitz zur Bildung von zwei nebeneinanderliegenden aufragenden Halteabschnitten aufweisen, die an ihrem oberen Ende die quer zur Fahrtrichtung nebeneinanderliegenden aufragenden Halteteile von jeweils flachem, rechteckförmigem Querschnitt mit rückwärtiger und vorderer Flachseite bilden, wobei die in Fahrtrichtung vorspringenden Verbindungsteile den Halteteilen entsprechend schmale, rechteckförmige Schlitze aufweisen. Dies führt zu einer stabilen, einfachen Ausbildung, die ein leichtes Aufschieben und Abziehen der Verbindungsteile ermöglicht. Der aufrechte Tragteil kann in einen am Fahrzeugrahmen befestigten Bügelteil einsetzbar und in diesem durch einen leicht lösbaren Stift festlegbar sein.

Der Deckel weist zweckmäßigerweise einen derart profilierten Randbereich auf, daß dieser in der Schließstellung schnappartig über beide nebeneinanderliegende randartige Sackhalterahmen greift und den Deckel in der Schließstellung sichert. Dadurch wird in der Schließstellung des Deckels die Anordnung weiter stabilisiert, da der beide Halterahmen schnappartig übergreifende Deckel die Halterahmen, die nur an ihren innenliegenden vorderen Ecken abgestützt sind, zusätzlich sichert. In gleicher Weise ist der Deckel in seiner Schließlage festgelegt.

In Verbindung mit der Krümmung des Auslaßabschnittes des seitlichen Sammelkanals ist es zweckmäßig, wenn die Gelenkverbindung des Deckels im Abstand vor den beiden Sackhalterahmen von dem Tragteil so abgestützt ist, daß die Schwenkachse schräg zu der vertikalen Längsmittelebene des Fahrzeugs orientiert ist und der Deckel nach oben und schräg nach außen zur Fahrzeugseite hin aufklappbar ist, zu der hin der Tragteil gegenüber der senkrechten Längsmittelebene des Fahrzeugs versetzt angeordnet ist. Diese Ausbildung trägt einmal der Krümmung des Auslaßabschnittes des Sammelkanals Rechnung. Sie unterstützt aber weiterhin die freie und leichte Aufschwenkbarkeit des Deckels unbehindert durch den Fahrzeugsitz, wobei in der aufgeklappten Stellung der Deckel weit außerhalb des Bereichs der beiden Halterahmen liegt, so daß diese leicht abgezogen und aufgesteckt werden können.

Um eine sichere Abführung der Förderluft zu gewährleisten, ohne die Förderung des Halmgutes in die Sammeleinrichtung zu behindern, ist es zweckmäßig, wenn der Deckel in der Schließstellung abdichtend mit den Sackhalterahmen zusammenwirkt und auf der Seite, auf der die Eintrittsöffnung für den Auslaßabschnitt liegt den Halterahmen in der der Auslaßrichtung des Auslaßabschnittes entgegengesetzten Querrichtung unter Bildung eines Luftauslaßes überkragt. Um zu verhindern, daß Grasteilchen mit der austretenden Luft ausgetragen werden weist der Deckel zweckmäßigerweise zwischen dem Auslaßabschnitt und dem Luftauslaß eine die Grasteilchen zurückhaltende gitterartige Anordnung oder dgl. auf.

Die Stabilität der Halterahmen kann noch wesentlich verbessert werden, wenn jeder Sackhalterahmen an seiner vorderen inneren Ecke von einem starren Eckteil gebildet ist, an dem der vorspringende Verbindungsteil starr befestigt ist und der senkrecht verlaufende Bereiche aufweist, die in der Arbeitsstellung die Flachseiten und Kanten des zugehörigen aufrechten Halteteils umgreifen.

Die neue Sammeleinrichtung ist außerordentlich stabil, sehr einfach und leicht im Aufbau und damit auch preiswert herzustellen. Sie ist außerdem leicht zu handhaben. Sie bedarf auch keiner festen oder flexiblen oder teleskopartig verschiebbaren Verbindung mit dem Sammelkanal. Durch die Ausbildung der Verbindung zwischen den Halterahmen und dem Tragteil ist sichergestellt, daß jeder Halterahmen in seiner Arbeitsstellung gegen seitliches Verschieben oder gegen Verdrehen oder gegen Verkanten zuverlässig gesichert ist. Dabei können die zusammenwirkenden Teile entsprechende Anschläge aufweisen, welche die Absenkstellung begrenzen und jede Verschwenkung und Verkantung der Halterahmen ausschließen. Zusätzlicher Befestigungsmittel bedarf es nicht. Der domförmige Deckel kann beispielsweise aus elastisch verformbaren Kunststoff bestehen und dichtet in seiner schnappartigen Schließstellung die oberen Enden der Grassammelsäcke ab. Durch die vorgesehene Anordnung ergibt sich ein außerordentlich großer Schwenkbereich für den Deckel, was die Handhabung der Grassammeleinrichtung wesentlich erleichtert. Da die Förderluft entgegen der Transportrichtung der in die Sammeleinrichtung eintretenden Grasteile abgeführt wird, sind die Verluste an Grasteilchen außerordentlich gering. Es besteht auch keine Gefahr, daß sich das Grasfanggitter in dem Deckel nennenswert zusetzt.

Die Erfindung wird nachfolgend anhand schematischer Zeichnungen an einem Ausführungsbeispiel näher erläutert.

Es zeigen :

Figur 1 eine perspektivische Ansicht schräg von vorne eines Fahrzeuges mit untergehängter Rasenmäheinrichtung und am rückwärtigen Ende angeordneter Sammeleinrichtung gemäß der Erfindung.

Figur 2 in größerem Maßstabe eine perspektivische Ansicht schräg von hinten, wobei der Tragteil für die Sammeleinrichtung bei abgenommener Sammeleinrichtung gezeigt ist.

Figur 3 in größerem Maßstabe und perspektivisch auseinandergezogener Darstellung die beiden inneren und vorderen Eckbereiche der Sackhalterahmen der Sammeleinrichtung gemäß der Erfindung sowie die zugehörigen Teile zum Verbinden mit dem Tragteil und dem Deckel.

Figur 4 die Sammeleinrichtung in Seitenansicht im angebauten Zustand an das Fahrzeug.

Figur 5 eine Draufsicht auf die Anordnung nach Fig. 4 und

Figur 6 einen senkrechten Querschnitt entlang der Schnittlinie VI-VI der Figur 4.

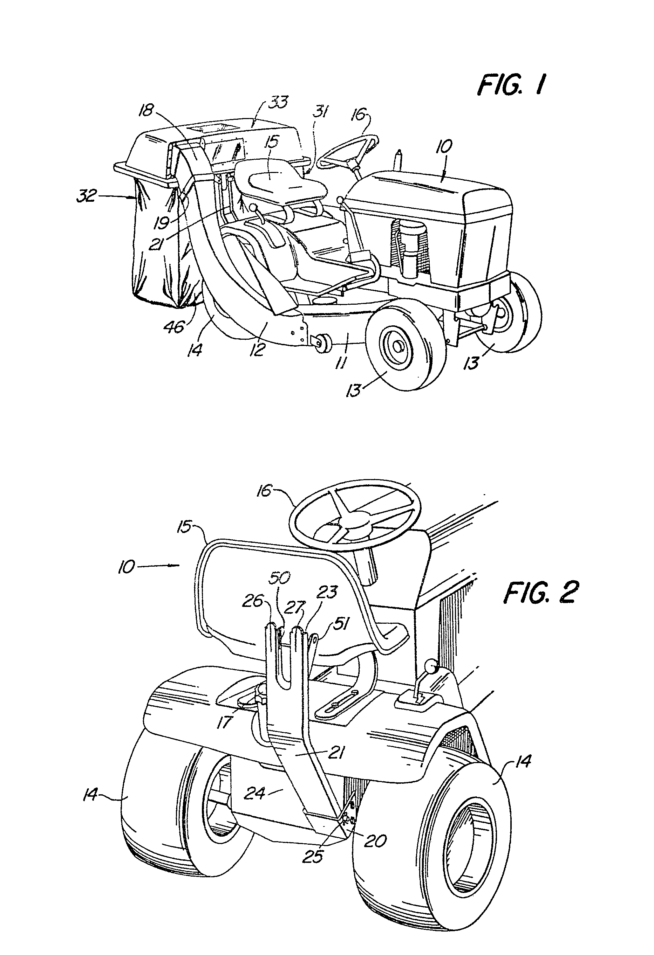

In Figur 1 ist ein schlepperartiges Fahrzeug 10 der Art vorgesehen, wie sie für Rasenmäher oder Prakrasenmäher verwendet werden. An der Unterseite ist eine Mäheinrichtung montiert, die einen seitliches Grasauslaß 11 aufweist, durch den das Gras in einen seitlichen, nach oben und nach hinten gekrümmten Sammelkanal 12 ausgeworfen wird. Das Fahrzeug 10 weist vordere lenkbare Räder 13 und rückwärtige Antriebsräder 14 auf. Auf dem Fahrzeug ist eine Fahrestation durch den Sitz 15 und das Lenkrad 16 angedeutet. Im dargestellten Beispiel wird das Fahrzeug 10 durch einen Brennkraftmotor angetrieben, für den am rückwärtigen Ende des Fahrzeuges unterhalb des Fahrzeugsitzes ein Kraftstofftank mit rückwärtigen nach oben ragenden Füllstutzen 17 vorgesehen ist.

Der Sammelkanal 12 erstreckt sich außerhalb des rechtsseitigen Antriebsrades 14 nach oben und nach rückwärts. Der hinter dem Antriebsrad 14 liegende Bereich des Sammelkanals ist nach innen gekrümmt und mit einem rückwärtigen Auslaßabschnitt 18 verbunden. Dieser ist ebenfalls gekrümmt und in Bezug auf die Längsmittellinie des Fahrzeuges nach innen geneigt. Der Auslaßabschnitt 18 des Sammelkanals 12 ist mit dem oberen Ende des Sammelkanals 12 durch quer verlaufende horizontale Schwenkelemente 19 schwenkbar verbunden, so daß der Abschnitt 18 in senkrechter Richtung frei beweglich und einstellbar ist.

An dem rückwärtigen Abschnitt 24 des Fahrzeugrahmens und ein wenig innerhalb von dem rechtsseitigen Antriebsrad 14 ist ein U-förmiger Bügelteil 20 befestigt, der das untere Ende eines rückwärtigen und nach oben geneigten Tragteils 21 für die Sammeleinrichtung aufnimmt. Man erkennt, daß der Bügelteil 20 und der Tragteil 21 gegenüber der senkrechten Längsmittelebene des Fahrzeuges zur rechten Seite des Fahrzeugs hin versetzt angeordnet sind. Der Tragteil 21 weist nach vorne vorspringende senkrechte Flansche 22 an seinen entgegengesetzten Seiten auf. Im oberen Endbereich ist ein nach oben offener Schlitz 23 mittig zwischen den seitlichen Flanschen 22 angeordnet. Der Schlitzrand ist ebenfalls durch einen nach vorne vorspringenden senkrechten Flansch 28 begrenzt. Das untere Ende des Tragteils 21 und insb. auch die Flansche 22 sind unter einem entsprechenden Winkel schräg abgeschnitten, so daß das untere Ende sich gegen den senkrechten hinteren Teil 24 des Fahrzeugrahmens anlegen kann. Ein Stift 25 ragt durch die Flansche 22 und die Wände des Bügelteils 20 und hält somit den Tragteil 21 in einer festen Betriebsstellung. Die gesamte Sammeleinrichtung zusammen mit dem Tragteil 21 können so von dem Fahrzeug auf einfache Weise lediglich durch Lösen des Stiftes 25 abgenommen werden.

Der Schlitz 23 teilt den Tragteil an seinem oberen Ende in zwei im Abstand voneinander liegende aufrechte Halteabschnitte 26 und 27. De oberen Enden der Flansche 22 und 28 sind im Bereich unterhalb des oberen Endes der Halteabschnitte 26, 27 abgeschnitten, so daß die Halteabschnitte 26, 27 laschenartig nach oben ragen und zum freien oberen Ende hin verjüngt sind.

Aus den Figuren wird deutlich, daß der Fahrersitz einerseits wie auch der Füllstutzen 17 andererseits etwa mittig zur senkrechten Fahrzeuglängsmittelebene angeordnet sind, während beide Halteabschnitte 26, 27 gegenüber dieser Ebene zur rechten Fahrzeugseite hin versetzt angeordnet sind.

Mit Hilfe des Tragteils 21 werden zwei voneinander unabhängige Sammeleinheiten 31 und 32 sowie ein beiden gemeinsamer Deckel 33 aus Kunststoff unterstützt. Jede Sammeleinheit 31 und 32 weist einen aus Metallstangen von kreisförmigem Querschnitt zusammengesetzten Sackhalterahmen 34, 35 von rechteckförmigem Querschnitt auf, wobei die beiden innen liegenden Seitenglieder 36, 37 dicht nebeneinander und parallel zur Fahrtrichtung angeordnet sind. Die Rahmenglieder sind einzelne Stangen, deren Enden jeweils im Bereich der Ecken nahe beieinander liegen und im Bereich der jeweiligen inneren vorderen Ecke durch besondere starre Eckenteile 38, 39 starr miteinander verbunden sind. Die Eckenteile 38, 39 weisen jeweils parallel zu den horizontal verlaufenden Stangenenden verlaufende Armabschnitte auf, die mit den Stangenenden fest verschweißt sind. An einem Armabschnitt jedes Eckteils ist jeweils ein in Fahrtrichtung nach vorne vorspringender horizontaler Verbindungsteil 40, 41 in Höhe des Sackrahmens starr befestigt. Jeder Verbindungsteil 40, 41 weist einen langgestreckten Schlitz 42 auf, der über den aufragenden Halteteil 29, 30 jedes Halteabschnittes 26, 27 des Tragteils 21 in senkrechter Richtung auffädelbar bzw. abnehmbar ist. Die Schlitze 42 weisen im wesentlichen die gleichen Abmessungen wie die Außenabmessungen der aufragenden Halteteile 29 und 30 auf und gleiten auf diesen nach unten, bis die Verbindungsteile 40, 41 mit ihrer Unterseite auf den nach oben weisenden Stirnseiten der abgeschnittenen Flansche 22, 28 zur Auflage kommen. Diese Stirnflächen dienen somit als Begrenzungsanschläge für die nach unten gerichtete Aufschiebebewegung der Verbindungsteile und damit zur Lagesicherung der gesamten Sammeleinheit 31 bzw. 32. Die Eckenteile 38 und 39 weisen außerdem in vertikaler Richtung langgestreckte flanschartige Bereiche 43, 44 auf, die sich im aufgesetzten Zustand an die Flachseite des Tragteils 21 anlegen. Von den Bereichen 43, 44 gehen außerdem in senkrechter Richtung langgestreckte und in Fahrtrichtung vorspringende Seitenflanschbereiche 45 aus, die an den Seitenflanschen 22 des Tragteils zur Anlage kommen.

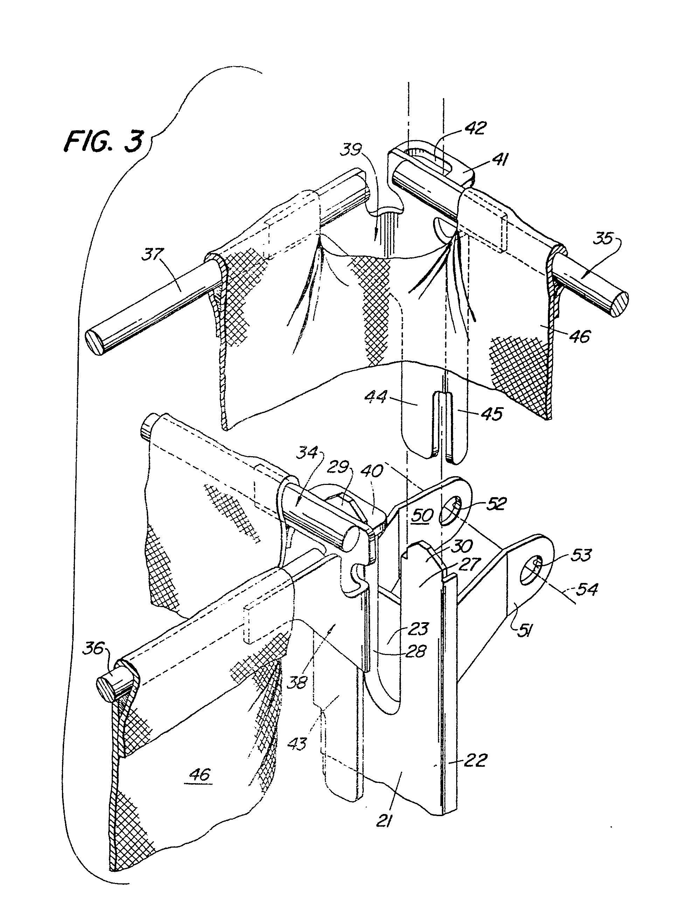

Wie am Besten aus Fig. 3 ersichtlich ist, kann man z. B. die linke Sammeleinheit 31 leicht dadurch abnehmen, daß man die Einheit zusammen mit dem Verbindungsteil 40 so weit anhebt, daß der Verbindungsteil 40 von dem zugehörigen aufragenden Halteteil 29 freikommt. Die Form der Schlitze 42 und der flanschartigen Bereiche 43 bis 45 verhindert oder begrenzt jede seitliche und nach vorne oder nach rückwärts gerichtete sowie jede Kippbewegung der Sammeleinheit gegenüber dem Tragteil 21. Im dargestellten Beispiel sind die Sammeleinheiten 31 und 32 jeweils mit einem Gewebesack 46 ausgerüstet, der z. B. an den zugehörigen Rahmengliedern festgenäht oder durch schnappartige, nicht gezeigte Verbindungselemente in üblicher Weise befestigt sind.

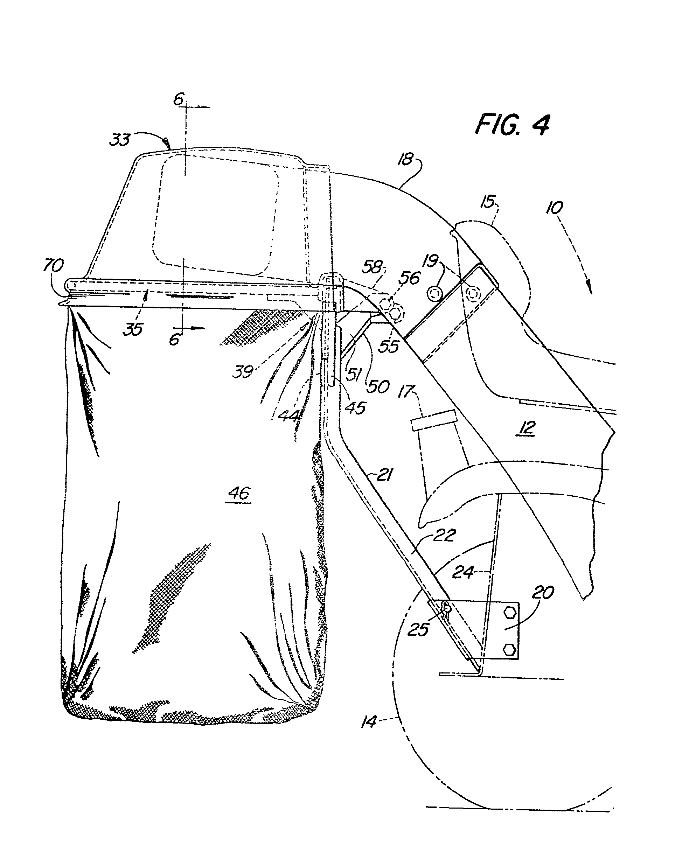

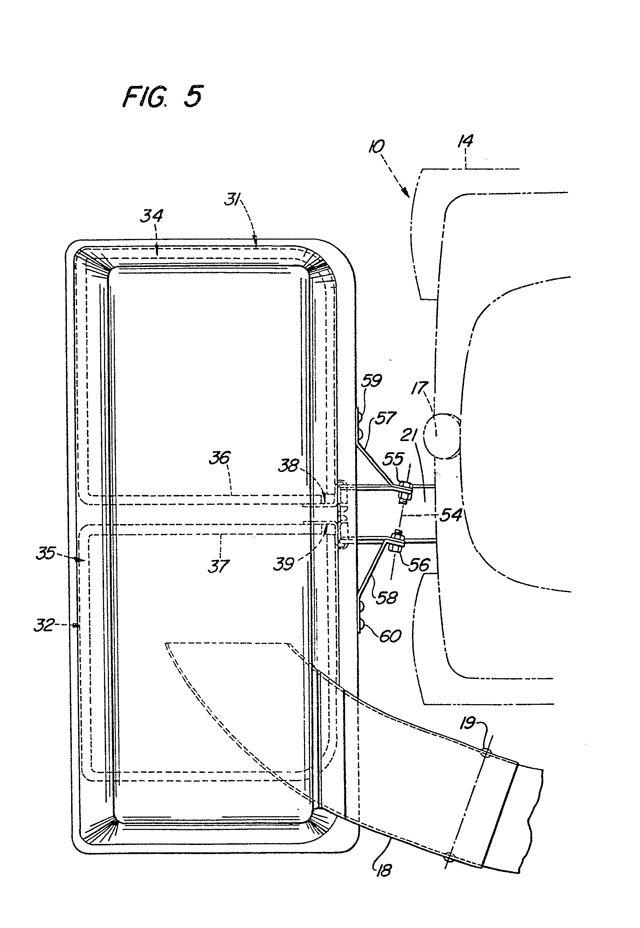

Im oberen Bereich des Tragteils 21 ist ein U-förmiger Halter z. B. angeschweißt, der zwei nach vorne vorspringende, bügelförmige Arme 50, 51 aufweist. Im Bereich der vorderen Enden dieser Arme sind Öffnungen 52, 53 vorgesehen, die entlang einer Achse 54 miteinander in Fluchtung stehen. Wie am Besten aus den Figuren 4 und 5 hervorgeht, ist die Achse 54 von links nach rechts in rückwärtiger Richtung und ebenso von links nach rechts in Richtung nach oben geneigt, wobei beide Neigungen jeweils etwa 10° betragen verglichen mit einem rechten Winkel gegenüber der senkrechten Fahrzeuglängsmittelebene. Eine von zwei Stiften gebildete Gelenkverbindung 55, 56 dient zur gelenkigen Verbindung zwischen den Armen 50, 51 und zwei Haltern 57 und 58. Diese Halter 57 und 58 sind an ihren rückwärtigen Enden abgebogen und bei 59 und 60 an dem vorderen zentralen Bereich des Deckels 33 festgenietet. Der gesamte Deckel 33 kann damit um die schräge Achse 54 des Tragteils 21 aus der Schließstellung nach oben und nach vorne geschwenkt werden.

Der Deckel 33 weist eine etwa rechteckförmige Öffnung 65 an einem seitlichen Ende ihrer Vorderseite auf. Durch diese Öffnung 65 ragt der Auslaßabschnitt 18 des Sammelkanals in das Innere der Sammeleinrichtung. Bei 66 ist an dem Deckel nahe der Öffnung 65 ein rechteckförmiger Kragen 67 aus Gummi festgenietet, der sich von der Öffnungskante nach innen erstreckt und an der Außenfläche des Auslaßabschnittes 18 angreift. Der Kragen 67 bildet eine Dichtung um den Auslaßabschnitt 18 und verhindert, daß Gras oder andere Fremdstoffe sowie Luft aus der Sammeleinrichtung ausgeblasen werden, während zur gleichen Zeit der Kragen eine begrenzte relative Beweglichkeit zwischen dem Auslaßabschnitt 18 und dem Deckel 13 gewährleistet. Es sollte hier bemerkt werden, daß unter Bezugnahme auf Fig. 5 eine Verlängerung der Schwenkachse 54 mit einer Linie zusammenfällt, die im wesentlichen senkrecht zu der Achse des Auslaßabschnittes 18 verläuft. Auf diese Weise wird es möglich, daß der Deckel gesenkt und gehoben werden kann und gleichzeitig der Auslaßabschnitt 18 sich durch die Öffnung 65 und in gleitendem Kontakt mit dem Kragen 67 gegenüber dem Deckel verschieben kann.

Der Deckel 33 kann im Querschnitt kronenförmig oder domförmig gewölbt sein, so daß er einen ausreichenden Durchgang für das Gras bildet, das durch die Auslaßöffnung des Auslaßabschnittes 18 quer über die beiden Sammeleinheiten 31 und 32 hinweg geworfen oder geblasen wird. Der Auslaßabschnitt 18 weist an seinem obersten Ende einen gekrümmten Abschnitt auf, der die Auslaßöffnung im wesentlichen parallel zur Fahrtrichtung orientiert, so daß die Grasabschnitte sich quer zur Fahrtrichtung bewegen. Der Deckel 33 weist einen unteren profilierten Randbereich 70 auf, der eine untere rippenförmige Lippe bildet, die sich um die Enden und die Rückseite des Deckels erstreckt. Der Zweck dieses profilierten Randbereiches ist zweifach. Einmal verstärkt die Profilierung die Sackhalterahmen bzw. Sammeleinheiten 31, 32, wenn der Deckel sich in seiner verriegelten Schließstellung befindet, wobei die Rippe des Profils unter die stangenförmigen Abschnitte des Sackhalterahmens greift. Da der Deckel aus festem Kunststoffmaterial besteht, kann sich der profilierte Randbereich ausreichend elastisch verformen, um den Deckel an dem Sackhalterahmen festzulegen bzw. um den Deckel von den Halterahmen zu lösen. Der profilierte Randbereich 70 dient damit als eine schnappartige Schließverbindung in der Schließstellung.

Häufig ist es erwünscht, die aus Textil bestehenden Säcke 46 mit Kunststoff auszukleiden. Die oberen Randbereiche der Auskleidung sind dabei über den Sackhalterahmen gezogen. Wenn der Deckel sich in der Schließstellung befindet, kann der profilierte Randbereich zusätzlich dazu dienen, die über den Sackhalterahmen gezogenen Randbereiche der Kunststoffauskleidung in ihrer Lage zu sichern.

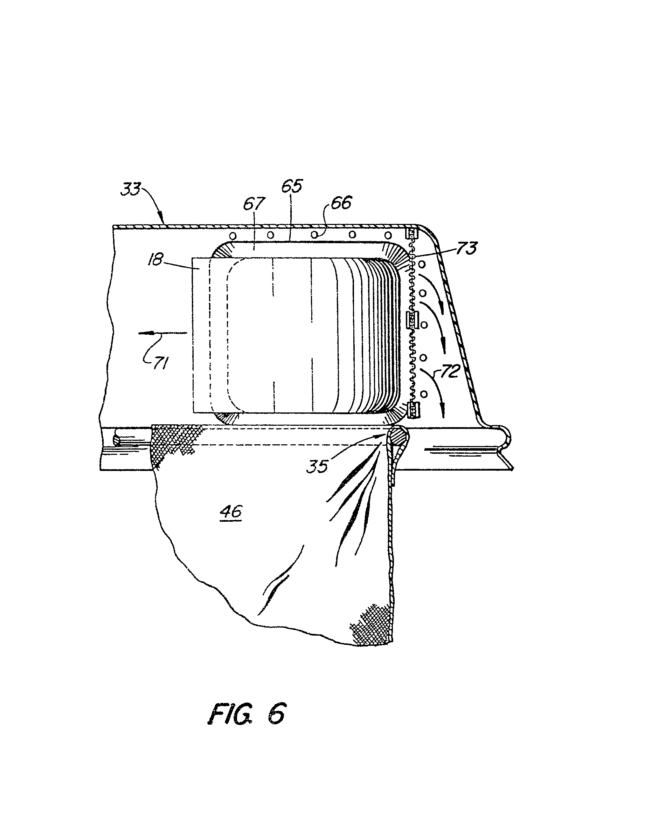

Es wird nun auf die Figuren 5 und 6 Bezug genommen. Daraus ist ersichtlich, daß das rechte Ende des Deckels die außen liegende Seite des betreffenden Sackhalterahmens erheblich überkragt. Wenn Kunststoffauskleidungen in den Stoffsäcken 46 verwendet werden, wird bei geschlossenem Deckel die Sammeleinrichtung relativ sicher abgedichtet. Um ein sauberes Füllen der Säcke vom Auslaßabschnitt 18 her zu gewährleisten, muß für eine ausreichende Abführung der Förderluft Sorge getragen werden. Dabei bewegen sich Gras und Luft durch die Auslaßöffnung des Auslaßabschnittes 18 und sind zum linksseitigen Ende der Sammeleinrichtung gerichtet (siehe Fig. 5). Dabei fällt das Gras in die linke Sammeleinheit 31. Die mit dem Gras ankommende Luft wird in dem Deckel umgekehrt und kann durch den überkragenden Abschnitt des Deckels 33 am rechtsseitigen Ende gemäß den Pfeilen entweichen. Wenn der linksseitige Bereich der Sammeleinrichtung gefüllt ist, füllen die ankommenden Grasteilchen den rechtsseitigen Bereich der Sammeleinrichtung. Dabei kann die Luft weiterhin unbehindert rechtsseitig über das überkragende Ende des Deckels ausströmen. Ein die Grasteilchen zurückhaltendes Gitter 73 oder dgl. kann zwischen dem Auslaßabschnitt 18 und dem überkragenden Teil des Deckels vorgesehen sein. Wenn keine Plastikauskleidungen für die Säcke verwendet werden, können die Sammeleinheiten 31 und 32 dadurch geleert werden, daß man die zugehörigen Sackhalterahmen zusammen mit den Säcken 46 von den aufragenden Halteteilen 29 und 30 nach oben abstreift und entleert. Das Wiederanbringen ist manuell einfach, indem die Schlitze 42 in den Verbindungsteilen über die aufragenden Halteteile von oben nach unten gestreift werden.

Es wird darauf hingewiesen, daß ein wesentlicher Vorteil darin besteht, daß die linksseitige Sammeleinheit 31 unabängig von der anderen Einheit 32 leicht abgehoben werden kann, wenn es erforderlich ist den Tank des Fahrzeuges über den Füllstutzen 17 zu füllen. Durch die versetzte Lage des Tragteils und die geneigte Orientierung der Schwenkachse 54 kann der Deckel 33 so aufgeklappt werden, daß sein linkes Ende außerhalb des Zugriffsbereiches des Füllstutzens 17 liegt, wobei das Aufschwenken auch nicht durch den weit hinten liegenden Sitz des Fahrzeuges behindert wird.

Dies wird auch noch dadurch gefördert, daß die Schwenkachse 54 durch die weit vor der vorderen Begrenzung der Sammeleinrichtung bzw. des Deckels liegenden Gelenkverbindung 55, 56 beim Aufschwenken auch um ein erhebliches Maß gegenüber seiner Schließstellung angehoben wird, so daß auch dadurch jeder Konflikt mit dem Sitz 15 verhindert wird.

Wenn die gesamte hängend angeordnete Mäheinrichtung abgenommen werden soll, kann die Sammeleinrichtung insgesamt auf einfache Weise zusammen mit dem Tragteil 21 lediglich durch Entfernen des Befestigungsstiftes 25 und Ausheben des Tragteils 21 aus dem bügelförmigen Halteteil 20 entfernt werden.

**Patentansprüche**

1. Sammeleinrichtung an Rasenmähern mit einem Kraftstofftank-Füllstutzen, der nur von hinten zugänglich ist, wobei die Sammeleinrichtung hängend an einem Fahrzeug (10) angeordnet ist, deren Hinterräder (14) den Fahrzeugrahmen (24) abstützen, und bei der ein seitlicher Sammelkanal (12) des Rasenmähers nach rückwärts und nach oben ansteigend bis zu einem hinter dem Fahrzeug liegenden Auslaßabschnitt (18) führt, der die abgemähten Rasenteilchen in Richtung quer zur Fahrtrichtung des Fahrzeuges (10) in die Sammeleinrichtung leitet, welche zwei voneinander unabhängige, jeweils rechteckförmige, randartige Halterahmen (34, 35) für Grassammelsäcke (46) mit nebeneinanderliegenden Seitenabschnitten (36, 37) aufweist, die sich — in Fahrtrichtung gesehen — von einer innenliegenden vorderen Ecke aus parallel zur Fahrtrichtung nach hinten erstrecken, wobei die Halterahmen (34, 35) durch einen oberen Deckel (33) abdeckbar und mittels eines aufrechten Tragteils (21) an den Fahrzeugrahmen (24) etwas tiefer als der Auslaßabschnitt (18) des Sammelkanals (12) befestigbar sind, dadurch gekennzeichnet, daß die beiden Halterahmen (34, 35) jeweils an den innenliegenden vorderen Ecken der nebeineinanderliegenden Seitenabschnitte (36, 37) starre Eckenteile (38, 39) und daran starr angebrachte, in Fahrtrichtung vorspringende Verbindungsteile (40, 41) aufweisen, und daß jeder Verbindungsteil (40, 41) von oben her auf das obere Ende des aufrechten Tragteils (21) aufschiebbar und in die Betriebsstellung des Halterahmens (34, 35) absenkbar ist, derart, daß durch Abziehen des Verbindungsteils (40, 41) einer der Halterahmen (34, 35) mit dem zugehörigen Grassammelsack (46) aus der Betriebsstellung nach oben der Zugang zu dem Kraftstofftank-Füllstutzen (17) freigebbar ist.

2. Sammeleinrichtung nach Anspruch 1, bei welcher der Deckel (33) mittels einer am Tragteil (21) angeordneten Gelenkverbindung (55, 56) um eine Querachse (54) in Fahrtrichtung aufklappbar ist, dadurch gekennzeichnet, daß der aufrechte Tragteil (21) und/oder die Gelenkverbindung (55, 56) für den Deckel (33) gegenüber der Mitte eines Fahrzeugsitzes (15) oder gegenüber dem rückwärtigen und nach oben ragenden Füllstutzen (17) zu der Fahrzeugseite hin versetzt angeordnet sind, auf der der seitliche Sammelkanal (12) angeordnet ist.

3. Sammeleinrichtung nach 2, dadurch gekennzeichnet, daß der domförmig ausgebildete Deckel (33) eine nach vorne weisende Öffnung (65) zur frei verschieblichen Aufnahme des Auslaßabschnittes (18) des seitlichen Sammelkanals (12) aufweist und seine zum Aufklappen dienende Querachse (54) rechtwinkelig zu dem Auslaßabschnitt (18) so orientiert ist, daß der Deckel (33) unter relativer Gleitbewegung des Auslaßabschnittes (18) in der Öffnung (65) um die Querachse (54) aufklappbar ist.

4. Sammeleinrichtung nach einem der Ansprüche 1 bis 3, dadurch gekennzeichnet, daß der aufrechte Tragteil (21) an seinem oberen Ende einen Schlitz (23) zur Bildung von zwei nebeneinanderliegenden, aufragenden Halteabschnitten (26, 27) aufweist, die an ihrem oberen Ende die quer zur Fahrtrichtung nebeneinanderliegenden aufragenden Halteteile (29, 30) von jeweils flachem, rechteckförmigem Querschnitt mit rückwärtiger und vorderer Flachseite bilden, und daß die in Fahrtrichtung vorspringenden Verbindungsteile (40, 41) den Halteteilen entsprechend schmale rechteckförmige Schlitze (42) aufweisen.

5. Sammeleinrichtung nach einem der Ansprüche 1 bis 4, dadurch gekennzeichnet, daß der Deckel (33) einen derart profilierten Randbereich (70) aufweist, daß dieser in der Schließstellung schnappartig über beide nebeneinanderliegende randartige Sackhalterahmen greift und den Deckel (33) in der Schließstellung sichert.

6. Sammeleinrichtung nach einem oder mehreren der Ansprüche 2 bis 5, dadurch gekennzeichnet, daß die Gelenkverbidung (55, 56) des Deckels (33) im Abstand vor den beiden Sackhalterahmen von dem Tragteil (21) so abgestützt ist, daß die Schwenkachse (54) schräg zu der vertikalen Längsmittelebene des Fahrzeuges orientiert ist und der Deckel (33) nach oben und schräg nach außen zu der Fahrzeugseite hin aufklapphar ist, zu der hin der Tragteil (21) gegenüber der senkrechten Längsmittelebene des Fahrzeugs versetzt angeordnet ist.

7. Sammeleinrichtung nach einem oder mehreren der Ansprüche 1 bis 6, dadurch gekennzeichnet, daß der Deckel (33) in der Schließstellung abdichtend mit dem Sackhalterahmen zusammenwirkt und auf der Seite, auf der die Eintrittsöffnung (65) für den Auslaßabschnitt (18) liegt, den Sackhalterahmen in der der Auslaßrichtung des Auslaßbschnittes (18) entgegengesetzten Querrichtung unter Bildung eines Luftauslasses (72) überkragt.

8. Sammeleinrichtung nach Anspruch 7, dadurch gekennzeichnet, daß der Deckel (33) zwischen dem Auslaßabschnitt (18) und dem Luftauslaß (72) eine die Grasteilchen zurückhaltende gitterartige Anordnung (73) oder dgl. aufweist.

9. Sammeleinrichtung nach einem oder mehreren der Ansprüche 1 bis 8, dadurch gekennzeichnet, daß jeder Sackhalterahmen an seiner vorderen inneren Ecke von einem starren Eckteil gebildet ist, an dem der vorspringende Verbindungsteil (40, 41) starr befestigt ist und der senkrecht verlaufende Bereiche (43, 44, 45) aufweist, die in der Arbeitsstellung die Flachseiten und Kanten (27, 22, 28) des zugehörigen aufrechten Halteteils umgreifen.

10. Sammeleinrichtung nach einem oder mehreren der Ansprüche 1 bis 9, dadurch gekennzeichnet, daß der aufrechte Tragteil (21) in einen am Fahrzeugrahmen (24) befestigten Bügelteil (20) einsetzbar und in diesem durch einen leicht lösbaren Stift (25) festlegbar ist.

**Claims**

1. A collecting device on lawn mowers having a fuel tank filler which is only accessible from the rear, wherein the collecting device is disposed in a hanging arrangement on a vehicle (10), the rear wheels (14) of which support the vehicle chassis (24), and in which a lateral collecting passage (12) of the lawn mower leads rising upwardly and rearwardly to an outlet portion (18) which is disposed behind the vehicle and which conducts the mowed pieces of grass in a direction transversely with respect to the direction of travel of the vehicle (10) into the collecting device which has two mutually independent, respectively rectangular, rim-like holder frames (34, 35) for grass collecting bags (46), with juxtaposed side portions (36, 37) which, as considered in the direction of travel, extend from an inward front corner rearwardly parallel to the direction of travel, wherein the holder frames (34, 35) can be covered by a top lid (33) and can be fixed by means of a perpendicular carrier portion (21) to the vehicle chassis (24) at a somewhat lower position than the outlet portion (18) of the collecting passage (12), characterised in that the two holder frames (34, 35) are each provided, at the inward front corners of the juxtaposed side portions (36, 37), with rigid corner portions (38, 39) and connecting portions (40, 41) which are rigidly mounted thereto and which project in the direction of travel, and that each connecting portion (40, 41) can be pushed from above on to the upper end of the perpendicular carrier portion (21) and can be moved downwardly into the operating position of the holder frame (34, 35), in such a way that withdrawal of the connecting portion (40, 41) of one of the holder frame (34, 35), in such a way that withdrawal of the connecting portion (40, 41) of one of the holder frames (34, 35) with the associated grass collecting bag (46) out of the operating position in an upward direction exposes access to the fuel tank filler (17).

2. A collecting device according to claim 1 wherein the lid (33) can be pivoted open in the direction of travel about a transverse axis (54) by means of a hinge connection (55, 56) provided on the carrier portion (21), characterised in that the perpendicular carrier portion (21) and/or the hinge connection (55, 56) for the lid (33) are arranged at a position displaced towards the side of the vehicle on which the lateral collecting passage (12) is disposed, relative to the middle of a vehicle seat (15) or relative to the rearward and upwardly projecting filler (17).

3. A collecting device according to claim 2 characterised in that the lid (33) which is of a dome-like configuration has a forwardly facing opening (65) for freely displaceably receiving the outlet portion (18) of the lateral collecting passage (12) and its transverse axis (54) which serves for pivotal opening movement thereof is oriented at a right angle with respect to the outlet portion (18) such that the lid (33) can be pivoted open about the transverse axis (54), with relative sliding movement of the outlet portion (18) in the opening (65).

4. A collecting device according to one of claims 1 to 3 characterised in that the perpendicular carrier portion (21), at its upper end, has a slot (23) for forming two juxtaposed, upwardly projecting holding portions (26, 27) which at their upper ends form the upwardly projecting holding parts (29, 30) which are in juxtaposition transversely with respect to the direction of travel, said holding parts each being of flat rectangular cross-section with flat front and rear sides, and that the connecting portions (40, 41) which project in the direction of travel have narrow rectangular slots (42), corresponding to the holding parts.

5. A collecting device according to one of claims 1 to 4 characterised in that the lid (33) has an edge region (70) which is of such a configuration that in the closure position it engages with a snap engagement over the two juxtaposed rim-like bag holding frames and secures the lid (33) in the closure position.

6. A collecting device according to one or more of claims 2 to 5 characterised in that the hinge connection (55, 56) of the lid (33) is supported by the carrier portion (21), at a spacing in front of the two bag holder frames, in such a way that the pivot axis (54) is oriented inclinedly with respect to the vertical longitudinal central plane of the vehicle, and the lid (33) can be pivoted open upwardly and inclinedly outwardly towards the side of the vehicle towards which the carrier portion (21) is disposed at a displaced position, with respect to the vertical longitudinal central plane of the vehicle.

7. A collecting device according to one or more of claims 1 to 6 characterised in that in the closure position the lid (33) sealingly co-operates with the bag holder frame and, on the side at which the entry opening (65) for the outlet portion (18) is disposed, overhangs the bag holder frame in the transverse direction opposite to the outlet direction of the outlet portion (18), forming an air outlet (72).

8. A collecting device according to claim 7 characterised in that between the outlet portion (18) and the air outlet (72) the lid (33) has a gridlike arrangement (73) or the like for retaining the pieces of grass.

9. A collecting device according to one or more of claims 1 to 8 characterised in that each bag holder frame is formed at its front inner corner by a rigid corner portion to which the projecting connecting portion (40, 41) is rigidly fixed and which has perpendicularly extending regions (43, 44, 45) which in the operating position engage around the flat sides and edges (27, 22, 28) of the associated perpendicular holding part.

10. A collecting device according to one or more of claims 1 to 9 characterised in that the perpendicular carrier portion (21) can be fitted into a bracket loop member (20) secured to the vehicle chassis (24) and can be fixed therein by an easily releasable pin (25).

**Revendications**

1. Dispositif collecteur d'herbe pour tondeuse à gazon munies d'une tubulure de remplissage du réservoir à carburant qui n'est accessible que depuis l'arrière, le dispositif collecteur d'herbe étant suspendu à un véhicule (10) dont les roues arrière (14) soutiennent le châssis (24) du véhicule, et dans lequel un conduit collecteur latéral (12) de la tondeuse à gazon aboutit en direction de l'arrière et en s'élevant vers le haut à un tronçon de sortie (18) disposé derrière le véhicule, qui dirige les particules d'herbe coupée, dans une direction transversale à la direction de marche du véhicule (10), jusque dans le dispositif collecteur d'herbe, lequel comporte deux cadres de support (34, 35) indépendants l'un de l'autre, chaque fois en forme de rebords rectangulaires, pour des sacs collecteurs d'herbe (46), munis de parties latérales juxtaposées (36, 37) qui, lorsqu'on considère le sens de la marche, s'étendent vers l'arrière parallèlement au sens de marche depuis un angle avant intérieur, les cadres de support (34, 35) pouvant être recouverts par un couvercle supérieur (33) et pouvant être fixés sur le châssis (24) du véhicule au moyen d'un organe de support (21), à un niveau situé un peu plus bas que le tronçon de sortie (18) du conduit collecteur d'herbe (12), caractérisé en ce que les deux cadres de support (34, 35) comportent chaque fois, aux angles avant intérieurs des parties latérales juxtaposées (36, 37), des pièces d'angle rigides (38, 39) et des éléments de liaison (40, 41) rapportés rigidement sur elles et faisant saillie dans le sens de la marche, et en ce que chaque élément de liaison (40, 41) peut être engagé depuis le haut sur l'extrémité supérieure de l'organe de support vertical (21) et peut être abaissé jusque dans la position de travail du cadre de support (34, 35) de façon telle qu'en dégageant par traction l'élément de liaison (40, 41) de l'un des cadres de support (34, 35) avec le sac collecteur d'herbe correspondant (46) à partir d'une position de travail, l'accès à la tubulure de remplissage (17) du réservoir à carburant puisse être libéré.

2. Dispositif collecteur d'herbe suivant la revendication 1, dans lequel le couvercle (33) est relevable autour d'un axe transversal (54) dans le sens de la marche au moyen d'une liaison articulée (55, 56) prévue sur l'organe de support (21), caractérisé en ce que l'organe de support vertical (21) et/ou la liaison articulée (55, 56) prévue pour le couvercle (33) sont décalés en direction du côté du véhicule par rapport au milieu d'un siège (15) du véhicule ou par rapport à la tubulure de remplisage arrière (17) faisant saillie vers le haut, ce côté étant celui sur lequel le conduit collecteur d'herbe (12) est disposé.

3. Dispositif collecteur d'herbe suivant la revendication 2, caractérisé en ce que le couvercle (33) en forme de dôme comporte un orifice (65) dirigé vers l'avant pour la réception, d'une manière permettant un libre coulissement, du tronçon de sortie (18) du conduit collecteur latéral (12), son axe de pivotement (54) servant à son relevage étant orienté perpendiculairement au tronçon de sortie (18) de telle sorte que le couvercle (33) puisse être ouvert par relevage autour de l'axe transversal (54), avec un mouvement de coulissement relatif du tronçon de sortie (18) dans l'orifice (65).

4. Dispositif collecteur d'herbe suivant l'une quelconque des revendications 1 à 3, caractérisé en ce que l'organe de support vertical (21) comporte, à son extrémité supérieure, une fente (23) pour la formation de deux parties de retenue juxtaposées faisant saillie vers le haut (26, 27), qui forment à leur extrémité supérieure les éléments de retenue en saillie vers le haut (29, 30) disposés l'un à côté de l'autre transversalement à la direction de marche et ayant chaque fois une section droite rectangulaire plate, munis d'une face plane arrière et avant, et en ce que les éléments de liaison (40, 41) faisant saillie dans la direction de marche comportent des fentes rectangulaires étroites (42) correspondant aux éléments de retenue.

5. Dispositif collecteur d'herbe suivant l'une quelconque des revendications 1 à 4, caractérisé en ce que le couvercle (33) présente un bord (70) profilé de telle sorte que, dans la position de fermeture, il s'engage par emboîtement sur deux cadres de support de sacs en forme de rebords juxtaposés, en immobilisant le couvercle (33) en position de fermeture.

6. Dispositif collecteur d'herbe suivant une ou plusieurs des revendications 2 à 5, caractérisé en ce que la liaison articulée (55, 56) du couvercle (33) est, dans une position écartée vers l'avant des deux cadres de support des sacs, soutenue par l'organe de support (21) de façon telle que l'axe de pivotement (54) soit orienté obliquement par rapport au plan longitudinal vertical médian du véhicule et que le couvercle (33) puisse être ouvert par relevage vers le haut et obliquement vers l'extérieur en direction du côté du véhicule vers lequel l'organe de support (21) est décalé par rapport au plan longitudinal vertical médian du véhicule.

7. Dispositif collecteur d'herbe suivant une ou plusieurs des revendications 1 à 6, caractérisé en ce que le couvercle (33) coopère, en position de fermeture de façon étanche avec les cadres portant les sacs et surplombe, du côté sur lequel se trouve l'orifice d'entrée (65) prévu pour le tronçon de sortie (18), le cadre portant le sac dans la direction transversale opposée à la direction de sortie de l'herbe à partir de ce tronçon de sortie (18), en ménageant un orifice de sortie d'air (72).

8. Dispositif collecteur d'herbe suivant la revendication 7, caractérisé en ce que le couvercle (33) comporte, entre le tronçon de sortie (18) et l'orifice de sortie d'air (72), un dispositif en forme de grille ou analogue (73) retenant les brins d'herbe.

9. Dispositif collecteur d'herbe suivant une ou plusieurs des revendications 1 à 8, caractérisé en ce que chaque cadre portant un sac est formé, sur son angle intérieur avant, par une pièce d'angle rigide sur laquelle l'élément de liaison en saillie (40, 41) est fixé rigidement et qui comporte des parties (43, 44, 45) perpendiculaires entre elles qui, dans la position de travail, entourent les faces planes et les arêtes (27, 22, 28) de l'élément de retenue vertical conjugué.

10. Dispositif collecteur d'herbe suivant une ou plusieurs des revendications 1 à 9, caractérisé en ce que l'organe de support vertical (21) peut être inséré dans une pièce en forme d'étrier (20) fixée sur le châssis du véhicule et peut être immobilisé dans cette pièce au moyen d'une broche aisément dégageable (25).

0 072 572

FIG. 1

FIG. 2

1

FIG. 3

FIG. 4

# FIG. 5

FIG. 6